(19) Europäisches Patentamt
European Patent Office
Office européen des brevets

(11) Veröffentlichungsnummer: **0 013 274**
**A1**

(12) **EUROPÄISCHE PATENTANMELDUNG**

(21) Anmeldenummer: **79930034.8**

(22) Anmeldetag: **17.12.79**

(51) Int. Cl.$^3$: **F 16 B 23/00**
**F 16 B 41/00**

(30) Priorität: **22.12.78 LU 80698**

(43) Veröffentlichungstag der Anmeldung:
**09.07.80 Patentblatt 80/14**

(84) Benannte Vertragsstaaten:
**BE DE FR GB NL**

(71) Anmelder: **Fa Karcher Schraubenwerke GmbH**
**Talstrasse 3**
**D-6645 Beckingen 1(DE)**

(72) Erfinder: **Clemen, Paul**
**12, rue Bel Air**
**L-Ehnen(LU)**

(72) Erfinder: **Gross, Paul**
**Buchwaldstrasse 20**
**D-6645 Beckingen 1(DE)**

(74) Vertreter: **Neyen, René**
**ARBED Administration Centrale P.F. 1802**
**Luxemburg(LU)**

(54) **Mechanische Verbindungselemente und dazugehöriges Befestigungswerkzeug.**

(57) Ein mechanisches Verbindungselement, das zur Herstellung bleibender Verbindungen dient, besteht aus einer Schraube die an ihrer Kopffront Einkerbungen (11) aufweist, deren Höhe entlang zumindest einer durch das Zentrum der Front verlaufenden vorzugsweise geraden Linie ein Maximum aufweisen und in der Eindrehrichtung der Schraube gesehen einen Anschlag darstellen während sie in der der Eindrehrichtung entgegengesetzten Richtung zur Frontsohle hin abnehmen.

Der Kopf (10') eines Schlüssels zeigt die entsprechenenden Einkerbungen (11'), die Flächen (12') und (13'), sowie die Kanten (14'). Die zentrale Spitze (15') des Kopfes entspricht in ihrer Lage der Bohrung (15), die sich in der Mitte des Kopfes (10) befindet.

O
F
L
12'
13'
10'
15'
14'
14
15
13
11
10
12
20
21

FIG.1

EP 0 013 274 A1

Croydon Printing Company Ltd.

Mechanische Verbindungselemente und dazugehöriges Befestigungswerkzeug

---

Die vorliegende Erfindung betrifft ein mechanisches Verbindungselement, insbesondere zur Herstellung bleibender Verbindungen, sowie das dazugehörige Befestigungswerkzeug.

Das bekannteste mechanische Verbindungselement ist die Schraube, deren Eigenart darin besteht, dass die durch sie hergestellten Verbindungen üblicherweise lösbar sind.

Schraubenverbindungen kann man unter Zuhilfenahme besonderer mechanischer Vorrichtungen aber auch derart absichern, dass eine Lösung unter den zu erwartenden Betriebsbedingungen unterbleibt. Beispielsweise lassen sich an einem Fahrzeug Scheinwerfer derart anschrauben, dass die Verbindung auch bei starken und dauernden Vibrationen erhalten bleibt. Die Verbindung kann demnach, selbst unter strengen Betriebsbedingungen, als abgesichert gelten; nichtsdestoweniger ist wegen der Lösbarkeit der Verbindung mittels geeigneter Werkzeuge keine Absicherung gegen ein unbefugtes Abmontieren der Scheinwerfer gegeben.

In diesem Zusammenhang kann selbst die weitgehenst abgesicherte Schraubenverbindung nicht als bleibende Verbindung angesehen werden.

Während zum lösbaren Verbinden mechanischer Teile eine Fülle von Schraubenarten bekannt ist, kommen für das Herstellen bleibender Verbindungen lediglich Niete in Frage.

Die Verwendung von Nieten setzt jedoch zweierlei voraus: Erstens muss genügend Raum zur Verfügung stehen um die Niete mittels geeigneter Werkzeuge an ihren Enden zu stauchen und hierdurch die Verbindung herzustellen und zweitens müssen die beiden zu vernietenden Teile in der Lage sein, dem unter Schlagbelastung erfolgenden Stauchen standzuhalten ohne beschädigt zu werden.

Weiter kann es erwünscht sein, zwei mechanische Teile bleibend zu verbinden und gleichzeitig wenigstens eine der Aussenflächen der beiden Teile in glattem Zustand zu erhalten, wodurch Niete wegen ihrer beidseitigen Köpfe ausscheiden.

Das Ziel der Erfindung bestand demnach darin, mechanische Verbindungselemente vorzuschlagen, die das Herstellen bleibender Verbindungen gestatten und die angeführten Schwierigkeiten und Nachteile vermeiden.

Dieses Ziel wird erreicht durch die erfindungsgemässe Verbindungselemente deren Merkmal darin besteht, dass das festzuziehende Teil an seiner Frontseite Einkerbungen aufweist, deren Höhe entlang zumindest einer durch das Zentrum der Front verlaufenden vorzugsweise geraden Linie ein Maximum aufweisen und in der Eindrehrichtung der Schraube gesehen einen Anschlag darstellen während sie in der der Eindrehrichtung entgegengesetzten Richtung zur Frontsohle hin abnehmen.

Aus dieser Beschreibung ergibt sich, dass besagte Linien Kanten entsprechen und zwar Kanten jeweils einer zur Frontebene geneigten und einer zur Frontebene senkrechten Fläche. Da die Einkerbungen in ihrer Höhe, ausgehend von den Kanten stetig abnehmen, entstehen von Kante zu Kante gleichmässig geneigte Flächen, sowie an jeder Kante eine zur Frontebene senkrechte Fläche von dreieckiger, trapezförmiger oder rechteckiger Ausdehnung.

Nach einer bevorzugten Ausführung der erfindungsgemässen Verbindungselemente weist die Front 6 Einkerbungen auf, deren 6 Kanten entlang von 3 Linien liegen, die Durchmessern der Front entsprechen und um jeweils $60^{\circ}$ gegeneinander versetzt sind.

Der Neigungswinkel der zur Frontebene geneigten Flächen wird begrenzt durch die Höhe des festzuziehenden Teiles, bzw. durch die Anzahl der Einkerbungen bzw. der Kanten. So ist der Neigungswinkel in der bevorzugten Ausführungsform, die 6 Einkerbungen begreift, grösser als etwa in einer nur zwei Einkerbungen aufweisenden Ausführungsform, deren beide Kanten längs einer einzigen dem Durchmesser der Kopffront entsprechenden Linie liegen.

Die der Erfindung zugrundliegende Idee besteht darin, dass jede zu einer Kante gehörende, zur Frontebene senkrechten Anschlagsfläche einem als Gegenteil zum festzuziehenden Teil ausgebildeten Schlüssel eine Angriffsfläche bietet, sofern der Schlüssel in die Festziehrichtung gedreht wird.

Gemäss einer ersten Ausführungsform wird das Verbindungselement durch eine Schraube mit Schaft gebildet, die einen vorzugsweise runden Festziehkopf begreift. Letzterer weist an seiner Front die erfindungsgemässe, Einkerbungen begreifende Ausführung auf.

Die zur Frontebene senkrechten Anschlagsflächen sowohl des Kopfes des Verbindungselementes als auch des Schlüsselkopfes sind in der Lage, das vom Schlüssel ausgehende Drehmoment voll auf den Kopf des Verbindungselementes zu übertragen.

Wie leicht einzusehen, ist dies nicht der Fall wenn man den Schlüssel in die Losdrehrichtung des Verbindungselementes dreht. In diesem Fall werden nicht die zur Frontebene senkrechten, sondern die geneigten Flächen beansprucht. Das vom Schlüssel ausgehende Drehmoment wird nur in einem zu vernachlässigenden Mass übertragen, da die Drehkraft an den geneigten Flächen zerlegt wird, wobei eine in achsialer Richtung zum Verbindungselement wirkende Kraftkomponente entsteht, deren Betrag von der Grösse des Neigungswinkels der geneigten Fläche abhängt. Der Betrag der Kraftkomponente, die parallel zur Kopfebene wirkt kann nur einen Bruchteil des vom Schlüssel ausgehenden Drehmomentes übertragen, so dass das Lösen der Verbindung verhindert wird. Auch bewirkt die achsial wirkende Kraftkomponente ein Ausklinken des Schlüsselkopfes aus dem Kopf des erfindungsgemässen Verbindungselementes.

Erfindungsgemäss ausgebildete Schrauben können vorteilhafterweise mit einem Schaft mit Schneidgewinde ausgestattet sein. Dies stellt eine Alternative zu Ausführungen dar, in denen geläufige Gewinde zur Anwendung kommen. Der Vorteil von Schneidgewinden besteht darin, dass sich das Verbindungselement beim Eindrehen in die zu verbindenden Teile mit letzteren verspannt, was die Haltbarkeit der Verbindung fördert.

Weiter ist es im Hinblick auf ein autmatisiertes Eindrehen der erfindungsgemässen Schrauben vorteilhaft, die Front des Schraubenkopfes mittig mit einer Zentrierbohrung zu versehen und den als Gegenstück zum Kopf ausgebildeten Schlüssel mit einer in diese Bohrung hineinpassenden Spitze zu versehen.

Eine weitere Ausführungsform sieht vor, dass das erfindungsgemässe Verbindungselement eine Schraube mit Schaft und Gewinde, sowie eine dazugehörige Festziehmutter darstellt. Letztere zeigt an ihrer Front die charakteristischen Einkerbungen.

Zum Festziehen der erfindungsgemässen Verbindungselemente, sei es eine Schraube mit Festziehkopf oder eine Schraube mit Festziehmutter, kommt ein Schlüssel in Frage,dessen Angriffsfront als Gegenstück zur Kopffront des jeweiligen festzuziehenden Teils ausgebildet ist.

Zur Erläuterung der Erfindung wird auf die Zeichnungen verwiesen.

Fig. 1 zeigt eine perspektive Ansicht des erfindungsgemässen Verbindungselementes, sowie des dazu passenden Schlüssels;

Fig. 2 zeigt eine Anwendung, in der 2 Teile durch das Verbindungselement gemäss Fig. 1 verbunden sind;

Fig. 3 zeigt eine Mutter mit erfindungsgemäss ausgebildeter Kopffront;

Fig. 4 stellt eine Anwendung dar, in der 2 Teile durch das Verbindungselement gemäss Fig. 3 verbunden sind.

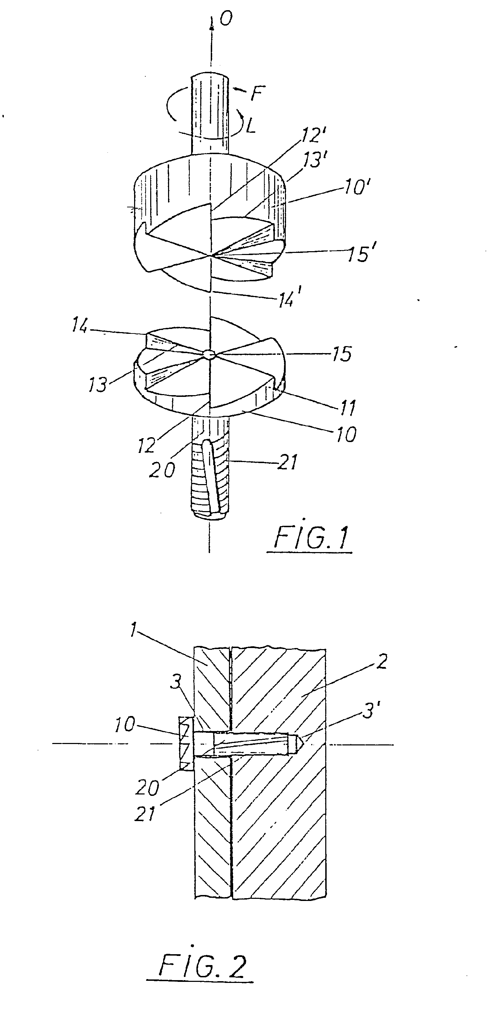

In Fig. 1 erkennt man den Kopf (10) und den Schaft (20) des Verbindungselementes. Die Einkerbungen (11) weisen die zur Kopffront senkrechten dreieckigen Flächen (12) und die geneigten Flächen (13) auf, deren gemeinsame Kanten (14), wie ersichtlich,

0013274

entlang von Linien verlaufen, die dem Durchmesser der Kopffront entsprechen und um $60^{\circ}$ gegeneinander versetzt sind.

Der Kopf (10') des Schlüssels zeigt die entsprechenden Einkerbungen (11'), die Flächen (12') und (13'), sowie die Kanten (14'). Die zentrale Spitze (15') des Kopfes entspricht in ihrer Lage der Bohrung (15), die sich in der Mitte des Kopfes (10) befindet.

Es ist leicht zu erkennen, dass der Schlüssel ohne weiteres in der Lage ist, beim Drehen in die Festziehrichtung (F) über die Flächen (12') auf die Flächen (12) des Verbindungselementes ein Drehmoment zu übertragen.

Hingegen kommt es beim Drehen des Schlüssels in die Losziehrichtung (L) zu einer Beanspruchung der Flächen (13') und (13). Wie unschwer zu erkennen, wird der Schlüssel hier eher in die mit (O) bezeichnete Richtung bewegt, als dass es zu einer Lösung des eingedrehten Verbindungselementes kommt.

In der hier dargestellten Ausführungsform weist der Schaft (20) des Verbindungselementes das Schneidgewinde (21) auf.

In Fig. 2 werden die Teile (1) und (2) durch ein erfindungsgemässes Verbindungselement vereint. Hierzu wurde Teil (1) mit einer durchgehenden Bohrung (3) und Teil (2) mit einer nicht durchgehenden Bohrung (3') versehen. Das Schneidgewinde (21) des Schafts (20) verspannt sich beim Eindrehen des Verbindungselements mit beiden Teilen (1) und (2) wodurch eine haltbare Verbindung zustandekommt, die sich dank der Ausbildung des Kopfes (10) des Verbindungselementes nicht lösen lässt.

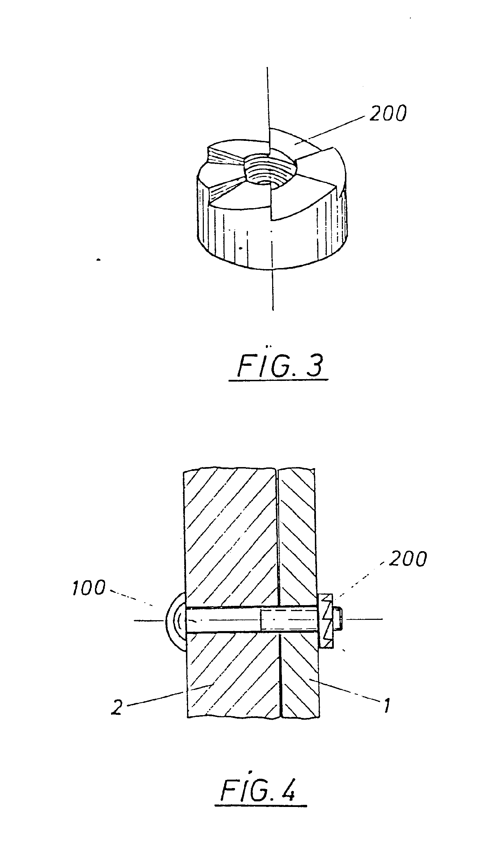

In Fig. 3 wird eine Mutter (100) gezeigt, deren Kopffront erfindungsgemäss ausgebildet ist. Auch in dieser Ausführungsform wird ein hier nicht gezeigter Schlüssel vorgesehen, dessen Kopf eine Front aufweist, die als Gegenstück zur Front (10) ausgebildet ist.

Fig. 4 zeigt ein Beispiel, in dem die erfindungsgemäss ausgebildete Mutter (100) und eine Linsenkopfschraube (200) zusammen wirken.

BAD ORIGINAL

0013274

# Patentansprüche

1) Mechanische Verbindungselemente zum Herstellen bleibender Verbindungen, dadurch gekennzeichnet, dass das festzuziehende Teil an seiner Frontseite Einkerbungen aufweist, deren Höhe entlang zumindest einer durch das Zentrum der Front verlaufenden vorzugsweise geraden Linie ein Maximum aufweisen und in der Eindrehrichtung gesehen einen Anschlag ergeben, während sie in der der Eindrehrichtung entgegengesetzten Richtung zur Frontsohle hin abnehmen.

2) Verbindungselement nach dem Anspruch 1, dadurch gekennzeichnet, dass die Frontseite sechs Einkerbungen aufweist, deren sechs Kanten maximaler Höhe entlang von drei Linien liegen, die Durchmessern der Kopffront entsprechen und um jeweils 60° gegeneinander versetzt sind.

3) Verbindungselement nach den Ansprüchen 1-2, dadurch gekennzeichnet, dass es eine Schraube mit Schaft und einem vorzugsweise runden Festziehkopf darstellt.

4) Verbindungselement nach den Ansprüchen 1-3, dadurch gekennzeichnet, dass es an seinem Schaft mit einem Schneidgewinde ausgestattet ist.

5) Verbindungselement nach den Ansprüchen 1-3, dadurch gekennzeichnet, dass die Kopffront mittig mit einer Zentrierbohrung versehen ist.

O
F
L
12'
13'
10'
15'
14'
14
15
13
11
12
10
20
21

FIG.1

1
2
3
3'
10
20
21

FIG.2

200

FIG. 3

200
100
2
1

FIG. 4

Europäisches Patentamt

# EUROPÄISCHER RECHERCHENBERICHT

0013274

Nummer der Anmeldung

EP 79 93 0034

| Kategorie | EINSCHLÄGIGE DOKUMENTE<br>Kennzeichnung des Dokuments mit Angabe, soweit erforderlich, der maßgeblichen Teile | betrifft Anspruch | KLASSIFIKATION DER ANMELDUNG (Int.Cl. 3) |
|---|---|---|---|
| X | GB - A - 1 223 900 (G.K.N.)<br>* Seite 1, Zeile 86 bis Seite 2, Zeile 21 *<br>-- | 1,4-6 | F 16 B 23/00<br>41/00 |
| X | FR - A - 1 232 468 (GOBIN DAUDE)<br>* Seite 1, rechte Spalte, Zeilen 31-44; Seite 2 *<br>-- | 1,5-7 | |
| X | FR - A - 1 424 148 (CARADEC)<br>* Seite 1, rechte Spalte, Zeilen 3-9 *<br>-- | 1,6,7 | RECHERCHIERTE SACHGEBIETE (Int. Cl. 3)<br>F 16 B 23/00<br>41/00 |
| X | US - A - 1 506 500 (RIPAMONTI)<br>* Seite 1, Zeilen 53-66 *<br>-- | 1,6 | |
| | FR - A - 466 526 (YSEBOODT)<br>* Seite 1, Zeilen 33-57 *<br>-- | 1,3,7 | |
| A | US - A - 1 956 963 (SALMEN) | | KATEGORIE DER GENANNTEN DOKUMENTE |
| A | US - A - 3 331 274 (WALTON) | | X: von besonderer Bedeutung |
| A | FR - A - 445 391 (STEINMAN) | | A: technologischer Hintergrund<br>O: nichtschriftliche Offenbarung |
| A | FR - A - 2 334 871 (NEIMAN) | | P: Zwischenliteratur |
| A | CH - A - 201 705 (GUGGER) | | T: der Erfindung zugrunde liegende Theorien oder Grundsätze |
| A | DE - A - 1 953 670 (OELGEMOLLER) | | E: kollidierende Anmeldung |
| A | DE - U - 1 976 863 (WILHELM)<br>* Zusammenfassung *<br>---- | | D: in der Anmeldung angeführtes Dokument<br>L: aus andern Gründen angeführtes Dokument |
| | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| Den Haag | 12-02-1980 | SEIFRIDSBERGER |